# EUROPÄISCHE PATENTANMELDUNG

(11) **EP 1 688 328 A1**
(43) Veröffentlichungstag der Anmeldung: **09.08.2006**
(21) Anmeldenummer: 05002313.4
(22) Anmeldetag: 03.02.2005
(51) Int. Cl.: B60R 25/10, G01S 15/04, G01S 15/52

(54) **System und Vorrichtung zur Überwachung eines Raumes**

(71) Anmelder: Delphi Technologies, Inc., Troy, MI 48007 (US)
(72) Erfinder: Menne, Roland, 57462 Olpe (DE)
(74) Vertreter: Manitz, Finsterwald & Partner GbR

(57) **Zusammenfassung**

Ein System zur Überwachung eines wenigstens teilweise durch zumindest eine Fensterscheibe (3) begrenzenden Raums (2), insbesondere Innenraums eines Kraftfahrzeugs (1) umfasst eine Schallquelle zur Erzeugung von Schallwellen in dem Raum (2), einen Schallempfänger für den Empfang von Schallwellen (5) in dem Raum und eine Steuer- und Auswerteeinheit zur Erfassung eines jeweiligen Alarmzustands in Abhängigkeit von dem vom Schallempfänger empfangenen Schallwellen (5). Es ist zusätzlich ein Sensor vorgesehen, über den die bei Beaufschlagung einer den Raum begrenzenden Fensterscheibe aufgebrachte mechanische Energie messbar ist. Die Ausgangssignale dieses Sensors werden ebenso wie die Ausgangssignale des Schallempfängers der Steuer- und Auswerteeinheit zugeführt, in der sie neben den Ausgangssignalen des Schallempfängers mit zur Erfassung eines jeweiligen Alarmzustandes herangezogen werden.

## Beschreibung

Die Erfindung betrifft ein System zur Überwachung eines wenigstens teilweise durch zumindest eine Fensterscheibe begrenzten Raumes, insbesondere Innenraumes eines Kraftfahrzeuges, mit einer Schallquelle zur Erzeugung von Schallwellen in dem Raum, einem Schallempfänger für den Empfang von Schallwellen in dem Raum und einer Steuer- und Auswerteeinheit zur Erfassung eines jeweiligen Alarmzustandes in Abhängigkeit von den vom Schallempfänger empfangenen Schallwellen. Sie betrifft ferner ein Verfahren der im Oberbegriff des Anspruchs 10 angegebenen Art.

Derartige Systeme und Verfahren beruhen darauf, dass Schall, der in einem geschlossenen Raum ausgestrahlt wird, dort ein im Wesentlichen homogenes Schallfeld bildet. Wird der Schall in dem Raum von einem Empfänger aufgenommen, kann das Volumen des Raums über die Laufzeit des Schalls bestimmt werden. Auf diese Weise kann dann festgestellt werden, ob sich das Volumen des Raums verändert hat.

Die genannten Systeme und Verfahren werden beispielsweise zur Überwachung des Innenraums von Kraftfahrzeugen eingesetzt, wozu insbesondere Ultraschallsensoren verwendet werden. Wird beispielsweise mit der Hand in das Innere des Fahrzeugs gegriffen, so ändert sich das Volumen, und es wird ein Alarm ausgelöst.

Bisher übliche Ultraschall-Sicherheitssysteme können nicht zwischen einem Bruch einer Fahrzeug-Fensterscheibe und einem Ultraschallrauschen oder -geräusch unterscheiden, wie es beispielsweise durch Pressluft oder eine gegen ein Fenster schlagende Kette erzeugt wird. Entsprechend ist die Gefahr der Auslösung eines falschen Alarms relativ hoch.

Von einer Innenraumsicherung wird nun aber zunehmend auch erwartet, dass sie im Stande ist, Alarm auszulösen, wenn eine Fensterscheibe beispielsweise infolge der Einwirkung eines Hammers oder dergleichen zu Bruch geht.

Der Erfindung liegt die Aufgabe zugrunde, ein verbessertes System sowie ein verbessertes Verfahren der eingangs genannten Art zu schaffen, bei denen eine zuverlässigere Erkennung eines jeweiligen Fensterscheibenbruchs infolge einer entsprechend massiven Einwirkung gewährleistet und die Gefahr von Fehlalarmen entsprechend reduziert ist.

Bezüglich des Überwachungssystems wird diese Aufgabe erfindungsgemäß dadurch gelöst, dass zusätzlich ein Sensor vorgesehen ist, über den die bei Beaufschlagung einer den Raum begrenzenden Fensterscheibe aufgebrachte mechanische Energie messbar ist, und dass die Ausgangssignale dieses Sensors ebenso wie die Ausgangssignale des Schallempfängers der Steuer- und Auswerteeinheit zugeführt sind, in der sie neben den Ausgangssignalen des Schallempfängers mit zur Erfassung eines jeweiligen Alarmzustandes herangezogen werden.

Aufgrund der kombinierten Verarbeitung der Ausgangssignale des Schallempfängers und der Ausgangssignale des zur Messung der aufgebrachten mechanischen Energie vorgesehenen Sensors in der Steuer- und Auswerteeinheit kann der Bruch einer Fensterscheibe, beispielsweise verursacht durch einen Hammerschlag oder eine andere, entsprechend massive Einwirkung, bei gering gehaltenem Risiko eines Fehlalarms zuverlässig erkannt werden.

Über den Sensor kann die bei dem betreffenden Eingriff aufgebrachte mechanische Energie gemessen werden. Das Ausgangssignal des Sensors liefert jedoch noch keine hinreichende Information darüber, ob eine jeweilige Fensterscheibe nun zu Bruch gegangen ist oder nicht. Die zusätzliche Information erhält man über die gemessenen Schallsignale, die es ermöglichen, zwischen dem Bruch einer Fensterscheibe und einem Ultraschallrauschen oder -geräusch oder einem anderen Eingriff zu unterscheiden, bei denen es nicht zu einem Bruch der Fensterscheibe kommt.

Ein zu erfassender Alarmzustand ist also bevorzugt dann gegeben, wenn die über den Sensor gemessene mechanische Energie einen vorgebbaren Grenzwert überschreitet und die Fensterscheibe zerbricht.

Bei einer bevorzugten praktischen Ausführungsform des erfindungsgemäßen Überwachungssystems unterscheidet die Steuer- und Auswerteeinheit bei durch den gemessenen Energiewert überschrittenem Grenzwert anhand der Ausgangssignale des Schallempfängers also zwischen einem Bruch der Fensterscheibe und einem Schallrauschen und/oder einer nicht zu einem Bruch führenden Beaufschlagung der Fensterscheibe.

Bei Erfassen eines jeweiligen Alarmzustands ist über die Steuer- und Auswerteeinheit zweckmäßigerweise ein Alarmsignal auslösbar.

Als Sensor zur Messung der aufgebrachten mechanischen Energie ist bevorzugt ein Beschleunigungssensor vorgesehen.

Vorteilhafterweise ist die Empfindlichkeit des Sensors für eine vorgebbare Zeit nach dem Erfassen des Alarmzustands höher einstellbar. Dabei ist bei Erfassen eines jeweiligen Eingriffs in den überwachten Raum durch die Steuer- und Auswerteeinheit bevorzugt ein weiteres Alarmsignal auslösbar. Es ist daher sichergestellt, dass insbesondere im Rahmen eines versuchten Diebstahls ein jeweiliger Eingriff in das Fahrzeug die Auslösung eines weiteren Alarms mit sich bringt.

Bevorzugt ist als Schallquelle eine Ultraschallquelle und als Schallempfänger ein Ultraschallempfänger vorgesehen.

Von Vorteil ist insbesondere auch, wenn der Sensor in einer den Schallempfänger und/oder die Schallquelle umfassenden Einheit integriert ist.

Bezüglich des Verfahrens wird die oben genannte Aufgabe erfindungsgemäß dadurch gelöst, dass zusätzlich die bei einer jeweiligen Beaufschlagung einer den Raum begrenzenden Fensterscheibe aufgebrachte mechanische Energie gemessen wird und dass zur Erfassung eines jeweiligen Alarmzustandes die für die aufgebrachte mechanische Energie repräsentativen Messsignale zusammen mit den Ausgangssignalen des Schallempfängers entsprechend ausgewertet werden.

Vorteilhafte Ausgestaltungen des erfindungsgemäßen Verfahrens sind in den Unteransprüchen angegeben.

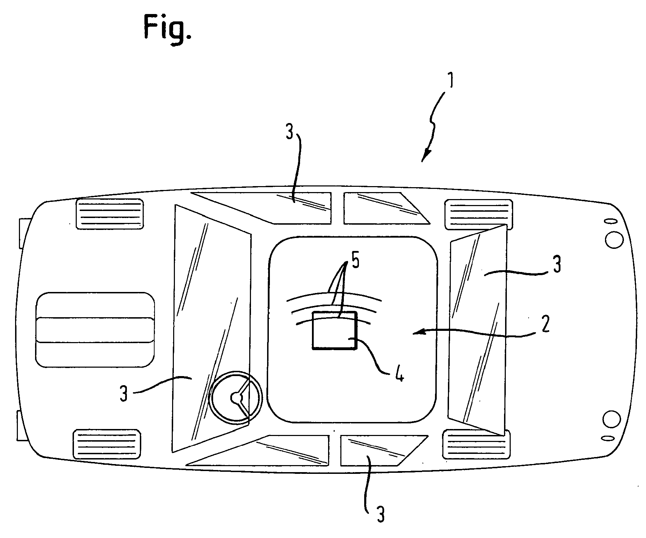

Die Erfindung wird im Folgenden anhand eines Ausführungsbeispiels unter Bezugnahme auf die Zeichnung näher erläutert.

Die einzige Figur dieser Zeichnung zeigt in schematischer Draufsicht ein mit einem erfindungsgemäßen Überwachungssystem ausgestattetes Fahrzeug 1.

In diesem Fahrzeug 1 bildet die Fahrgastzelle einen Raum 2, der zumindest teilweise durch Fensterscheiben 3 begrenzt ist. Innerhalb des abgeschlossenen Fahrgastraums 2 ist ein Ultraschallsystem 4 vorgesehen, das eine Schallquelle, einen Schallempfänger und zumindest einen Beschleunigungssensor aufweist. Zudem umfasst das Ultraschallsystem 4 eine Steuer- und Auswerteeinheit.

Über die Ultraschallquelle werden im Fahrgastraum Schallwellen 5 erzeugt, die aufgrund der Abgeschlossenheit des Fahrgastraums 2 ein im Wesentlichen homogenes Schallfeld bilden. Über den Ultraschallempfänger wird dieses Schallfeld aufgenommen und in Form entsprechender Messsignale an die Steuer- und Auswerteeinheit weitergegeben.

Findet nun ein Eingriff in den Fahrgastraum 2 statt, beispielsweise indem in den Fahrgastraum 2 mit einer Hand eingegriffen wird, so verändert sich das Schallfeld, was in der Steuer- und Auswerteeinheit festgestellt werden kann. Die Überwachung kann dabei insbesondere über eine Volumenmessung erfolgen, indem das Volumen das Fahrgastraums 2 mittels der Laufzeit der Schallsignale errechnet wird. Beim Eingreifen in den Fahrgastraum 2 beispielsweise durch eine Hand oder einen anderen Körperteil ändert sich dessen Volumen und damit die Laufzeit der Schallsignale. Diese Änderung wird in der Steuer- und Auswerteeinheit festgestellt und kann zur Erzeugung eines Ausgangssignals verwendet werden.

Über den beispielsweise im Ultraschallsystem 4 integrierten Beschleunigungssensor kann die bei Beaufschlagung einer den Fahrgastraum 2 begrenzenden Fensterscheibe 3 aufgebrachte mechanische Energie gemessen werden. Die Ausgangssignale dieses Beschleunigungssensors werden dann ebenso wie die Ausgangssignale des Ultraschallempfängers der Steuer- und Auswerteeinheit zugeführt, in der sie neben den Ausgangssignalen des Schallempfängers mit zur Erfassung eines jeweiligen Alarmzustandes herangezogen werden. Wird im Fahrzeug bereits ein Beschleunigungssensor verwendet, so kann dieser gleichzeitig auch zu der hier anstehenden Messung der mechanischen Energie mit herangezogen werden.

Dabei kann ein entsprechender zu erfassender Alarmzustand insbesondere dann gegeben sein, wenn die über den Beschleunigungssensor gemessene mechanische Energie einen vorgebbaren Grenzwert überschreitet und die betreffende Fensterscheibe zerbricht.

Die Steuer- und Auswerteeinheit unterscheidet bei durch den gemessenen Energiewert überschrittenem Grenzwert anhand der Ausgangssignale des Ultraschallempfängers zwischen einem Bruch der Fensterscheibe und einem Schallrauschen und/oder einer nicht zu einem Bruch führenden Beaufschlagung der Fensterscheibe.

Bei Erfassen eines jeweiligen Alarmzustands der genannten Art kann über die Steuer- und Auswerteeinheit ein Alarmsignal ausgelöst werden.

Durch eine kombinierte Signalverarbeitung der Ausgangssignale des Ultraschallempfängers und der Ausgangssignale des Beschleunigungssensors kann der Bruch einer Fensterscheibe, beispielsweise verursacht durch einen entsprechenden Hammerschlag oder einen anderen entsprechend massiven Eingriff, bei gering gehaltenem Risiko eines Fehlalarms zuverlässig erkannt werden.

Über den Beschleunigungssensor kann also die bei einer jeweiligen Beaufschlagung einer Fensterscheibe aufgebrachte mechanische Energie gemessen werden. Die betreffenden Messsignale liefern jedoch noch keine Information darüber, ob die betreffende Fensterscheibe nun zu Bruch gegangen ist oder nicht. Die erforderlichen zusätzlichen Informationen werden durch das gleichzeitig gemessene Ultraschallsignal bereitgestellt, so dass nunmehr zwischen einem Bruch der Fensterscheibe und einem Schallrauschen und/oder einer nicht zu einem Bruch führenden Beaufschlagung der Fensterscheibe unterschieden werden kann.

Die Empfindlichkeit des Beschleunigungssensors oder des Systems kann sowohl bei der Auswertung der Beschleunigungssensorsignale als auch bei der Auswertung der Ultraschallsignale für eine vorgebbare Zeit nach dem Erfassen des einen Fensterscheibenbruch signalisierenden Alarmzustands höher eingestellt werden. Es kann bei Erfassen eines jeweiligen Eingriffs in den überwachten Fahrgastraum 2 über den Beschleunigungssensor durch die Steuer- und Auswerteeinheit auch ein weiteres Alarmsignal ausgelöst werden. Ein Diebstahl irgendwelcher Gegenstände aus dem Fahrzeug wird dadurch entsprechend erschwert.

### Bezugszeichenliste

- 1: Fahrzeug
- 2: Raum, Fahrgastraum
- 3: Fensterscheibe
- 4: Ultraschallsystem
- 5: Schallwellen

## Patentansprüche

1. System zur Überwachung eines wenigstens teilweise durch zumindest eine Fensterscheibe (3) begrenzten Raumes (2), insbesondere Innenraumes eines Kraftfahrzeuges (1), mit einer Schallquelle zur Erzeugung von Schallwellen in dem Raum (2), einem Schallempfänger für den Empfang von Schallwellen (5) in dem Raum und einer Steuer- und Auswerteeinheit zur Erfassung eines jeweiligen Alarmzustandes in Abhängigkeit von den vom Schallempfänger empfangenen Schallwellen,
**dadurch gekennzeichnet ,**
**dass** zusätzlich ein Sensor vorgesehen ist, über den die bei Beaufschlagung einer den Raum (2) begrenzenden Fensterscheibe (3) aufgebrachte mechanische Energie messbar ist, und dass die Ausgangssignale dieses Sensors ebenso wie die Ausgangssignale des Schallempfängers der Steuer- und Auswerteeinheit zugeführt sind, in der sie neben den Ausgangssignalen des Schallempfängers mit zur Erfassung eines jeweiligen Alarmzustandes herangezogen werden.

2. Überwachungssystem nach Anspruch 1,
**dadurch gekennzeichnet ,**
**dass** ein zu erfassender Alarmzustand dann gegeben ist, wenn die über den Sensor gemessene mechanische Energie einen vorgebbaren Grenzwert überschreitet und die Fensterscheibe (3) zerbricht.

3. Überwachungssystem nach Anspruch 2,
**dadurch gekennzeichnet ,**
**dass** die Steuer- und Auswerteeinheit bei durch den gemessenen Energiewert überschrittenem Grenzwert anhand der Ausgangssignale des Schallempfängers zwischen einem Bruch der Fensterscheibe (3) und einem Schallrauschen und/oder einer nicht zu einem Bruch führenden Beaufschlagung der Fensterscheibe (3) unterscheidet.

4. Überwachungssystem nach einem der vorhergehenden Ansprüche,
**dadurch gekennzeichnet ,**
**dass** bei Erfassen eines jeweiligen Alarmzustandes über die Steuer-und Auswerteeinheit ein Alarmsignal auslösbar ist.

5. Überwachungssystem nach einem der vorhergehenden Ansprüche,
**dadurch gekennzeichnet ,**
**dass** als Sensor ein Beschleunigungssensor vorgesehen ist.

6. Überwachungssystem nach einem der vorhergehenden Ansprüche,
**dadurch gekennzeichnet ,**
**dass** die Empfindlichkeit des Sensors für eine vorgebbare Zeit nach dem Erfassen des Alarmzustandes höher einstellbar ist.

7. Überwachungssystem nach Anspruch 6,
**dadurch gekennzeichnet ,**
**dass** bei Erfassen eines jeweiligen Eingriffs in den überwachten Raum über den vorzugsweise als Beschleunigungssensor vorgesehenen Sensor durch die Steuer- und Auswerteeinheit ein weiteres Alarmsignal auslösbar ist.

8. Überwachungssystem nach einem der vorhergehenden Ansprüche,
**dadurch gekennzeichnet ,**
**dass** als Schallquelle eine Ultraschallquelle und als Schallempfänger ein Ultraschallempfänger vorgesehen ist.

9. Überwachungssystem nach einem der vorhergehenden Ansprüche,
**dadurch gekennzeichnet ,**
**dass** der Sensor in einer den Schallempfänger und/oder die Schallquelle umfassenden Einheit (4) integriert ist.

10. Verfahren zur Überwachung eines wenigstens teilweise durch zumindest eine Fensterscheibe (3) begrenzten Raumes (2), insbesondere des Innenraumes eines Kraftfahrzeuges (1), bei dem in dem Raum (2) mittels einer Schallquelle Schallwellen (5) erzeugt, in dem Raum (2) vorhandene Schallwellen mittels eines Schallempfängers aufgenommen und die Ausgangssignale des Schallempfängers zur Erfassung eines jeweiligen Alarmzustandes einer Steuer- und Auswerteeinheit zugeführt werden,
**dadurch gekennzeichnet ,**
**dass** zusätzlich die bei einer jeweiligen Beaufschlagung einer den Raum (2) begrenzenden Fensterscheibe (3) aufgebrachte mechanische Energie gemessen wird und dass zur Erfassung eines jeweiligen Alarmzustandes die für die aufgebrachte mechanische Energie repräsentativen Messsignale zusammen mit den Ausgangssignalen des Schallempfängers entsprechend ausgewertet werden.

11. Verfahren nach Anspruch 10,
**dadurch gekennzeichnet ,**
**dass** ein jeweiliger Alarmzustand dann erfasst wird, wenn die gemessene mechanische Energie einen vorgebbaren Grenzwert überschreitet und die Fensterscheibe (3) zerbricht.

12. Verfahren nach Anspruch 11,
**dadurch gekennzeichnet ,**
**dass** bei überschrittenem Grenzwert anhand der Ausgangssignale des Schallempfängers zwischen einem Bruch der Fensterscheibe (3) und einem Schallrauschen und/oder einer nicht zu einem Bruch führenden Beaufschlagung der Fensterscheibe (3) unterschieden wird.

13. Verfahren nach einem der vorhergehenden Ansprüche,
**dadurch gekennzeichnet ,**
**dass** bei Erfassen eines jeweiligen Alarmzustandes ein Alarmsignal ausgelöst wird.

14. Verfahren nach einem der vorhergehenden Ansprüche,
**dadurch gekennzeichnet ,**
**dass** zur Messung der aufgebrachten mechanischen Energie ein Beschleunigungssensor verwendet wird.

15. Verfahren nach Anspruch 14,
**dadurch gekennzeichnet ,**
**dass** die Empfindlichkeit des Beschleunigungssensors nach erfasstem Alarmzustand für eine vorgebbare Zeit höher eingestellt wird.

16. Verfahren nach Anspruch 15,
**dadurch gekennzeichnet ,**
**dass** bei Erfassen eines jeweiligen Eingriffs in den überwachten Raum (2) über den Beschleunigungssensor mittels der Steuer- und Auswerteeinheit ein weiteres Alarmsignal ausgelöst wird.

17. Verfahren nach einem der vorhergehenden Ansprüche,
**dadurch gekennzeichnet ,**
**dass** als Schallquelle eine Ultraschallquelle und als Schallempfänger ein Ultraschallempfänger verwendet wird.
